# EUROPÄISCHE PATENTSCHRIFT

(11) **EP 2 388 098 B1**
(45) Veröffentlichungstag und Bekanntmachung des Hinweises auf die Patenterteilung: **15.01.2014**
(21) Anmeldenummer: 11006667.7
(22) Anmeldetag: 18.06.2008
(51) Int. Cl.: B23D 77/10

(54) **Dehnreibahle**
Expandable reamer
Alésoir extensible

(30) Priorität: 20.06.2007 DE 102007028167
(43) Veröffentlichungstag der Anmeldung: 23.11.2011
(62) Teilanmeldung aus: 08759283.8
(73) Patentinhaber: MAPAL Fabrik für Präzisionswerkzeuge Dr. Kress KG, D-73431 Aalen (DE)
(72) Erfinder: Kress, Dieter, Dr., 73431 Aalen (DE)
(74) Vertreter: Gleiss, Alf-Olav

(56) Entgegenhaltungen:
- EP-A- 0 504 100
- CH-A- 514 387
- CH-A5- 666 643
- DE-A1- 19 950 168
- DE-C1- 10 117 990
- US-A- 2 093 986

## Beschreibung

Die Erfindung betrifft eine Dehnreibahle gemäß Oberbegriff des Anspruchs 1.

Dehnreibahlen der hier angesprochenen Art sind bekannt (DE 19950168A1). Sie weisen einen Grundkörper sowie einen Ringabschnitt auf, auf dessen Außenfläche mindestens eine geometrisch definierte Schneide vorgesehen ist. Mittels einer eine Stellschraube umfassenden Stelleinrichtung wird die radiale Position der mindestens einen Schneide eingestellt. Dazu wird ein eine konische oder ballige Außenfläche aufweisende Stellkörper der Stelleinrichtung mit Hilfe der Stellschraube in Richtung der Mittelachse der Dehnreibahle bewegt, sodass er den Ringabschnitt mehr oder weniger weitet. Es hat sich gezeigt, dass der Stellkörper der Stelleinrichtung einem hohen Verschleiß unterliegt und dass eine exakte Positionierung der mindestens einen Schneide oft nicht gelingt, weil die Position des Stellkörpers von der Lage des Gewindes im Grundköper, in das die Stellschraube eingreift, abhängt. Häufig ist das Gewinde nicht exakt konzentrisch zur Mittelachse der Dehnreibahle, sodass der Radius der mindestens einen Schneide nicht exakt einstellbar ist. Wenn die Dehnreibahle mehrere geometrisch definierte Schneiden aufweist, ist es in vielen Fällen nicht möglich, diese so einzustellen, dass sie exakt auf dem gleichen Flugkreis liegen.

Um dieses Problem zu vermeiden, wird der Stellkörper als Stellhülse ausgebildet, welche die Stellschraube umgibt und auf dieser schwimmend gelagert ist. Dabei weist die Stellschraube an ihrem ersten Ende ein in den Grundkörper der Dehnreibahle eingreifendes Außengewinde, einen die Stellhülse durchgreifenden, konzentrisch zur Mittelachse der Dehnreibahle angeordneten Schaft und an ihrem dem ersten Ende gegenüberliegenden zweiten Ende einen Kopf mit einer dem ersten Ende zugewandten Anlagefläche auf. An dieser liegt die Stellhülse an und kann bei einer entsprechenden Drehbewegung der Schraube in Richtung ihrer Drehachse, also in Richtung der Mittelachse der Dehnreibahle, so verlagert werden, dass der Ringabschnitt mit der mindestens einen Schneide aufgeweitet wird. Der Stellkörper ist also Teil eines Keilgetriebes, das bei entsprechender axialer Verlagerung der Stellhülse eine Aufweitung des Ringabschnitts und damit zur Positionierung der mindestens einen Schneide bewirkt. Die Anlagefläche des Kopfes der Stellschraube wirkt mit einer im Inneren der Stellhülse gegebenen Stützfläche zusammen, die an einem Boden der Stellhülse vorgesehen ist.

Der Kopf der Stellschraube und damit auch die Anlagefläche ist bei bekannten Dehnreibahlen weit ins Innere der stellhülse hineinverlagert. Insbesondere ist ein Abstand des Ringbereichs von der Stützfläche - in axialer Richtung gesehen - sehr viel größer als eine Erstreckung des Kopfes der Stellschraube. Daher sind bei einer Betätigung derselben Kippmomente in die Stellhülse einleitbar, so dass eine genaue und gleichmäßige Justierung des Flugkreises nicht möglich ist.

Aufgabe der Erfindung ist es daher, eine Dehnreibahle zu schaffen, welche diese genannten Nachteile nicht aufweist.

Zur Lösung dieser Aufgabe wird eine Dehnreibahle vorgeschlagen, welche die in Anspruch 1 genannten Merkmale umfasst.

Mit dem Begriff "schwimmend" wird ausgesagt, dass die Stellhülse sowohl in axialer als auch in radialer Richtung gegenüber der Stellschraube verlagerbar ist und damit Ausgleichsbewegungen durchführen kann. Er legt sich damit optimal von innen an den Ringabschnitt der Dehnreibahle an, sodass die mindestens eine geometrisch definierte Schneide sehr exakt einstellbar ist. Durch die schwimmende Lagerung der Stellhülse auf der Stellschraube wird erreicht, dass bei einer Rotation der Stellschraube also bei einer Drehung zur Einstellung der radialen Position der mindestens einen Schneide die Stellhülse drehfest im Ringabschnitt verbleibt und damit einem verminderten Verschleiß unterliegt.

Bei einem bevorzugten Ausführungsbeispiel ist vorgesehen, dass die Stelleinrichtung eine Auszieheinrichtung aufweist, die dazu dient, beim Lösen der Stellschraube die Stellhülse mit einer axialen Kraft zu beaufschlagen, um diese aus der Dehnreibahle herauszuziehen. Es ist damit möglich, die Stelleinrichtung als Baueinheit auszubilden, die in die Dehnreibahle eingesetzt und problemlos aus dieser entfernt werden kann.

Weitere Ausgestaltungen ergeben sich aus den übrigen Unteransprüchen.

Die Erfindung wird im Folgenden anhand der Zeichnung näher erläutert. Es zeigen:
- Figur 1: eine Prinzipskizze des vorderen Teils eines Ausführungsbeispiels einer Dehnreibahle im Längsschnitt;
- Figur 2: eine Explosionsdarstellung der aus Figur 1 ersichtlichen Stelleinrichtung der Dehnreibahle;
- Figur 3: eine Stirnansicht der Dehnreibahle gemäß Figur 1 ohne Stelleinrichtung, und
- Figur 4: zeigt eine teilweise aufgeschnittene Seitenansicht eines nicht zur Erfindung gehörenden Ausführungsbeispiels einer Dehnreibahle.

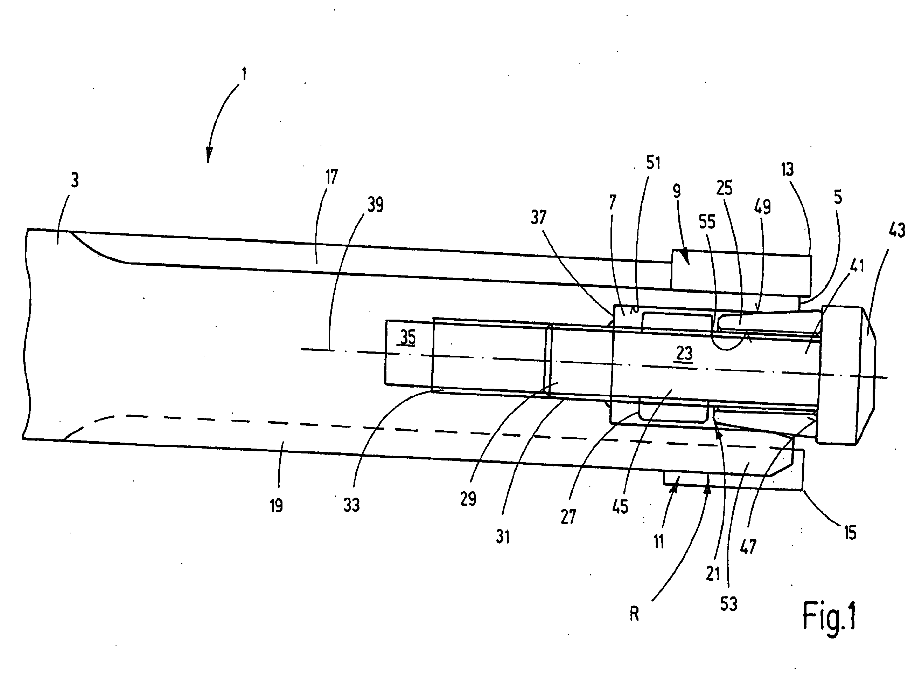

Aus Figur 1 ist der vordere Teil eines Ausführungsbeispiels einer Dehnreibahle 1 ersichtlich. Ihr linkes Ende ist abgebrochen und kann auf beliebige bekannte Art ausgebildet sein und einen Befestigungsschaft aufweisen, mit dem die Dehnreibahle 1 unmittelbar an einer Werkzeugmaschine oder aber an einem Zwischenstück, Adapter oder dergleichen drehfest anbringbar ist. Die Dehnreibahle 1 weist einen Grundkörper 3 auf, in den von rechts, also von seiner Stirnseite 5, aus ein Hohlraum 7 eingebracht ist.

In einem Bereich des Grundkörpers 3 nahe der Stirnseite 5, also in einem Ringabschnitt R, ist die Dehnreibahle 1 mit mindestens einer geometrisch definierten Schneide versehen. Bei dem hier dargestellten Ausführungsbeispiel sind vier paarweise einander gegenüberliegende Schneidplatten erkennbar, nämlich eine oben liegende Schneidplatte 9 und eine unten liegende Schneidplatte 11. Die Schneidplatten weisen an ihrem der Stirnseite 5 zugewandten Ende geometrisch definierten Schneiden 13 und 15 auf. Grundsätzlich ist es möglich, die Schneiden unmittelbar am Grundkörper 3 der Dehnreibahle 1 auszubilden. Vorzugsweise werden aber, wie bekannt, in den Grundkörper 3 Schneidplatten eingesetzt, die aus einem besonders verschleißfesten Material, insbesondere im Bereich der geometrisch definierten Schneiden, ausgebildet sein können.

Die Schneiden 13 und 15 tragen von einer Bohrungsoberfläche Späne ab, in der Regel, indem die Dehnreibahle 1 in Rotation versetzt wird, während das Werkstück still steht. Denkbar ist es aber auch, das Werkstück rotieren zu lassen, während die Dehnreibahle 1 feststeht. Entscheidend ist allein eine Relativ-Drehbewegung zwischen den Schneiden und der Bohrungsoberfläche.

In den Grundkörper 3 sind im Bereich der Schneidplatten 5 Spanräume 17 und 19 vorgesehen, die dazu dienen, die von den Schneiden 13 und 15 abgetragenen Späne abzuführen, damit diese nicht die Bohrungsoberfläche beeinträchtigen.

Der Hohlraum 7 dient der Aufnahme einer Stelleinrichtung 21, die eine auch als Justierschraube bezeichnete Stellschraube 23, einen Stellkörper, der vorzugsweise als die Stellschraube 23 umgreifende Stellhülse 25 ausgebildet ist, sowie eine Auszieheinrichtung 27 umfasst.

Die Stellschraube 23 weist an ihrem ersten Ende 29 ein Außengewinde 31 auf, das mit einem Innengewinde 33 zusammenwirkt. Dieses ist in die Wandung einer Bohrung 35 eingebracht, die sich vom Boden 37 des Hohlraums 7 weiter nach Innen in den Grundkörper 3 der Dehnreibahle 1 erstreckt. Der Hohlraum 7, die Bohrung 35 und die Stellschraube 23 sind konzentrisch zu einer auch als Drehachse bezeichneten Mittelachse 39 der Dehnreibahle 1 angeordnet.

An dem dem ersten Ende 29 gegenüberliegenden zweiten Ende 41 der Stellschraube 23 ist ein Kopf 43 vorgesehen, dessen Außendurchmesser größer ist als der des Schafts 45 der Stellschraube 23, der mit dem Außengewinde 31 versehen ist. Dadurch wird an dem Kopf 43 eine zum ersten Ende 29 der Stellschraube 23 weisende Anlagefläche 47 gebildet, an der das - in Figur 1 - rechte Ende der Stellhülse 25, also deren axiale Endfläche, anliegt.

Die Außenfläche 49 der Stellhülse 25 ist konisch oder ballig ausgebildet. Sie weist einen ersten an der Anlagefläche 47 anliegenden Bereich auf, dessen Außendurchmesser größer ist als der Innendurchmesser des Hohlraums 7. Das gegenüberliegende linke Ende der Stellhülse 25 weist einen Außendurchmesser auf, der kleiner ist als der Innendurchmesser des Hohlraums 7, sodass die Stellhülse 25 in den Hohlraum 7 eingreifen kann.

Die Innenfläche 51 des Hohlraums 7 kann bis zum Ende zylindrisch ausgebildet sein. Vorzugsweise ist jedoch vorgesehen, dass sie nahe der Stirnfläche 5 konisch oder ballig ausgebildet ist, sodass sie in einem Ringbereich 53 außen an der Stellhülse 25 anliegt. Je nach Ausgestaltung des Bereichs der Innenfläche 51 nahe der Stirnfläche 5 liegt dieser Ringbereich 53 mehr oder weniger weit innen im Hohlraum 7 in einem Abstand zur Stirnfläche 5.

Die Schneiden der Dehnreibahle 1, die hier als Schneiden 13 und 15 der Schneidplatten 9 und 11 ausgebildet sind, liegen also in einem Ringbereich 53 der Dehnreibahle 1, der von der Stelleinrichtung 21 mehr oder weniger weit aufgeweitet werden kann, um die radiale Position der Schneiden 13 und 15 einzustellen und zu justieren. Der Ringbereich 53 liegt hier im vorderen, der Stirnseite 5 zugewandten Abschnitt des Ringabschnitts R.

Zwischen der Innenfläche 51 des Hohlraums 7 und der Außenfläche 59 der Stellhülse wird also ein Keilgetriebe ausgebildet, mit dessen Hilfe eine axiale Bewegung der Stellhülse 25 in Richtung der Mittelachse 39 in eine mehr oder weniger weite radiale Aufweitung des Ringbereichs 53 umgesetzt wird, um eine radiale Positionierung der Schneiden 13 und 15 gegenüber der Mittelachse 39 zu realisieren.

Die Grundfunktion eines derartigen Keilgetriebes ist bekannt. Es ist daher klar, dass die Außenfläche 49 der Stellhülse 25 vorzugsweise konus- oder keilförmig ausgebildet ist, während die Innenfläche 51 des Hohlraums 7 im Berührungsbereich mit der Außenfläche 49 vorzugsweise ballig ausgebildet ist, also - im Querschnitt gesehen - einen Radius aufweist und sich in Richtung zur Stirnfläche 5 erweitert.

Die Innenfläche 55 der Stellhülse 25 weist einen Innendurchmesser auf, der etwas größer ist als der Außendurchmesser des Schafts 45 der Stellschraube 23. Daher ist die Stellhülse 25 auf dem Schaft 45 in axialer Richtung der Stellschraube 23, also in Richtung der Mittelachse 39, aber auch insbesondere in radialer Richtung zur Mittelachse 39 beweglich. Sollte also die Bohrung 35 nicht exakt konzentrisch zur Mittelachse 39 verlaufen, kann sich die Stellhülse 25 unabhängig davon an der Innenfläche 51 des Hohlraums 7 ausrichten und damit eine optimale Justierung der mindestens einen Schneidplatte gewährleisten.

Da die Stellhülse 25 getrennt von der Stellschraube 23 ausgebildet ist, können die Materialeigenschaften auch frei gewählt werden, um die Gleiteigenschaften der Stellhülse 25 gegenüber der Innenfläche 51 des Hohlraums 7 aber auch der Stellhülse 25 gegenüber der Anlagefläche 47 zu beeinflussen.

Die Stelleinrichtung 21 weist, wie gesagt, eine Auszieheinrichtung 27 auf. Diese dient dazu, beim Lösen der Stellschraube 23 die Stellhülse 25 auf einfache Weise aus dem Hohlraum 7 entfernen zu können. Die Auszieheinrichtung 27 wird von der Stellhülse 25 im Hohlraum 7 eingeschlossen, die liegt also links von der Stellhülse 25 im Hohlraum 7. Bei einer Auswärtsbewegung der Stellschraube 23 aus dem Hohlraum 7, in Figur 1 also nach rechts, nimmt die Auszieheinrichtung 27 die Stellhülse 25 mit.

Die Auszieheinrichtung 27 kann, wie hier als Gewindehülse ausgebildet sein, die auf den Schaft 25 der Stellschraube 23 aufgeschraubt und in einem geeigneten - in Richtung der Mittelachse 39 gemessenen - Abstand zur Stellhülse 25 angeordnet wird. Wenn sie die gewünschte Relativposition zur Stellhülse 25 aufweist, wird die Gewindehülse auf geeignete Weise am Schaft 45 fixiert, beispielsweise durch Kleben, Löten, Schweißen oder aber auch Verformen. Beim Ausschrauben der Stellschraube 23 kann sich also die Gewindehülse nicht mehr auf dem Schaft 45 verlagern und zieht die Stellhülse 25 aus dem Innenraum 7 heraus.

Es wird deutlich, dass anstelle der Gewindehülse auch ein quer zum Schaft 45 verlaufender Stift oder aber auch ein Ringbund vorgesehen werden kann, dessen Außendurchmesser so groß ist, dass er am linken Ende der Stellhülse 25 anschlägt, wenn die Stellschraube 25 aus dem Grundkörper 3 der Dehnreibahle 1 herausgeschraubt wird. Damit zieht also auch der Ringbund, wie auch ein entsprechender Stift, die Stellhülse 25 aus dem Hohlraum 7 heraus.

Die Stelleinrichtung 21 bildet also vorzugsweise eine Montageeinheit, die auf einfache Weise in eine Dehnreibahle 1 eingesetzt und aus dieser ausgebaut werden kann.

Es können damit an die Innenfläche 51 des Hohlraums 7 angepasste Stellhülsen 25 mit einem mehr oder weniger steilen Öffnungswinkel der Außenfläche 49 vorgesehen werden, die jeweils in eine Dehnreibahle 1 eingesetzt werden, um ein bestimmtes Einstellverhalten zu erreichen, also eine bestimmte Übersetzung des Keilgetriebes.

Aus der Darstellung gemäß Figur 1 ist ersichtlich, dass die Stelleinrichtung 21 sehr kompakt ist und auch bei Dehnreibahlen 1 mit sehr kleinem Durchmesser verwendet werden kann. Also auch Dehnreibahlen mit einem Bearbeitungsdurchmesser von 5 mm und weniger können mit einer Stelleinrichtung 21 der hier angesprochenen Art kombiniert werden. Dabei ist das Einstellverhalten der Stelleinrichtung 21 durch die Auslegung des an die Stirnseite 5 angrenzenden Bereichs der Innenfläche 51 des Hohlraums 7, insbesondere des mit der Stellhülse 25 zusammenwirkenden Ringbereichs 53, und der Außenfläche 49 der Stellhülse 25 beeinflussbar. Es ist also möglich eine Stellhülse 25 mit sehr flach geneigter Außenfläche 49 zu realisieren, sodass eine axiale Stellbewegung der Stellhülse 25 nur zu einer sehr kleinen radialen Aufweitung des Ringbereichs 53 führt. Damit ist die Dehnreibahle 1 sehr feinfühlig einstellbar.

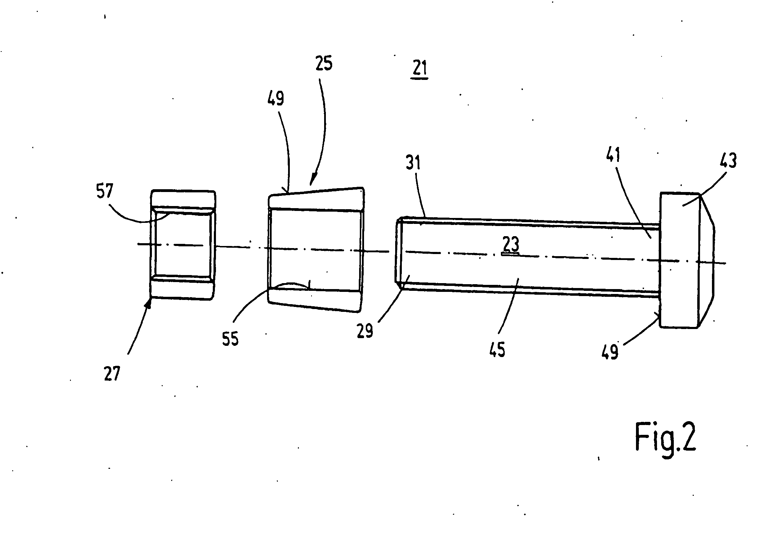

Figur 2 zeigt die aus Figur 1 ersichtliche Stelleinrichtung 21 in Explosionsdarstellung, damit deren Einzelteile noch einmal deutlich erkennbar werden. Gleiche Teile sind mit gleichen Bezugsziffern versehen, sodass insofern auf die Beschreibung zu Figur 1 verwiesen wird.

Die Stelleinrichtung 21 weist also eine Stellschraube 23 auf, die mit einem Kopf 43 und einem Schaft 45 versehen ist. Zumindest an dem dem Kopf 23 gegenüberliegenden ersten Ende 29 der Stellschraube 23 ist ein Außengewinde 31 vorgesehen. Es muss sich so weit nach rechts in Richtung auf das zweite Ende 41 des Schafts 45 erstrecken, das die hier als Gewindehülse ausgebildete Auszieheinrichtung 27, die mit einem mit dem Außengewinde 31 kämmenden Innengewinde 57 versehen ist, entsprechend weit auf den Schaft 45 aufgeschraubt werden kann, wie dies aus Figur 1 ersichtlich ist. Der Innendurchmesser der Innenfläche 55 der Stellhülse 25 ist so auf den Außendurchmesser des Schafts 45 der Stellschraube 23 ausgelegt, dass die Stellhülse 25 leicht auf die Stellschraube 23 aufgeschoben werden kann und gegenüber deren Schaft 45 radiales Spiel aufweist. Eine Fehlstellung der Stellschraube 23 führt damit nicht ohne Weiteres zu einer Beeinflussung der Stellhülse 25, sodass diese eine sehr exakte Einstellung der mindestens einen Schneide, hier der Schneiden 13 und 15 gewährleisten kann, sodass diese auf einem gemeinsamen Flugkreis liegen.

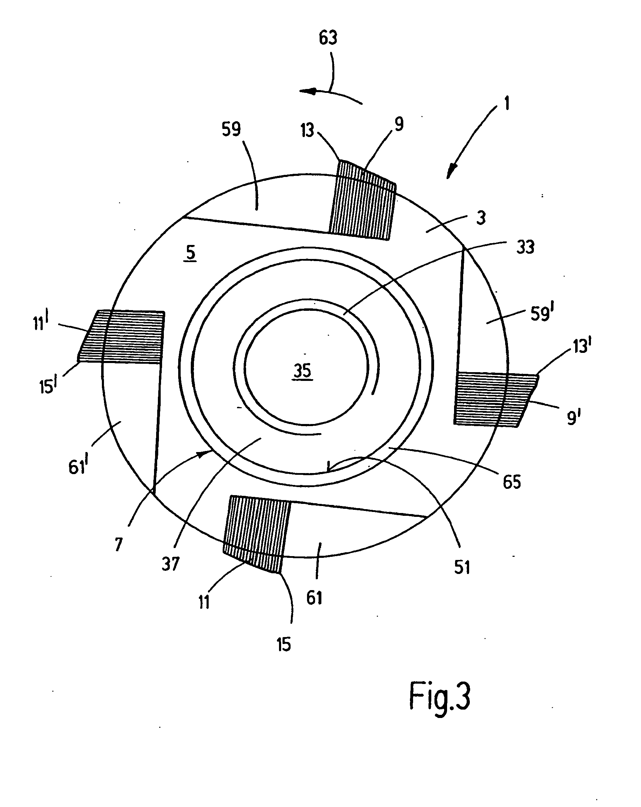

Figur 3 zeigt die Dehnreibahle 1 in Vorderansicht, also eine Draufsicht auf die in Figur 1 dargestellte Stirnseite 5. In den Grundkörper 3 sind mindestens eine, hier vier Schneidplatten eingesetzt, von denen die Schneidplatten 9 und 11 in Figur 1 sichtbar waren. Die entsprechend um ca. 90° versetzten Schneiden 9' und 11' sind identisch ausgebildet, sodass dazu nichts weiter auszuführen ist.

Die Schneidplatten 9, 9', 11 und 11' sind in den Grundkörper 3 der Dehnreibahle 1 eingebrachte Ausnehmungen 59, 61, 59' und 61' eingesetzt, sodass in der durch einen Pfeil 63 dargestellten Drehrichtung gesehen, vor den Schneiden 9, 11, 9', 11' je ein Spanraum gegeben ist, über den von den Schneiden 13, 15, 13', 15' abgetragene Späne über den Spanraum abtransportierbar sind.

Aus Figur 3 ist noch ersichtlich, dass in die Stirnseite 5 des Grundkörpers 3 der Dehnreibahle 1 ein Hohlraum 7 eingebracht ist. Durch eine Doppellinie ist angedeutet, dass die Innenfläche 51 des Hohlraums 7 über einen konisch oder ballig ausgebildeten Übergangsbereich 65 in die Stirnseite 5 übergeht. Deutlich erkennbar ist auch, dass in den Boden 37 des Hohlraums 7 die Bohrung 35 eingebracht ist, die ein Innengewinde 33 umfasst, in das die Stellschraube 23 eingreift.

Die Stirnansicht gemäß Figur 3 zeigt auch, dass die Dehnreibahle 1 mit vier Schneiden 13, 15, 13', 15' versehen ist, die - in Umfangsrichtung gesehen - in ungefähr gleichem Abstand zueinander angeordnet sind.

Grundsätzlich ist es möglich, die Dehnreibahle 1 mit mindestens einer Schneide zu versehen. Auch können zwei oder drei Schneiden vorgesehen werden. Besonders gleichmäßig stützt sich die Dehnreibahle 1 in einer zu bearbeitenden Bohrung ab, wenn sechs Schneiden vorgesehen sind.

Bei einer Dehnreibahle 1, die zur Bearbeitung von Bohrungen mit kleinem Innendurchmesser vorgesehen ist, sind vorzugsweise vier Schneiden vorgesehen, damit der Grundkörper 3 nicht zu sehr geschwächt wird und damit besonders kleine Bearbeitungsdurchmesser realisiert werden können.

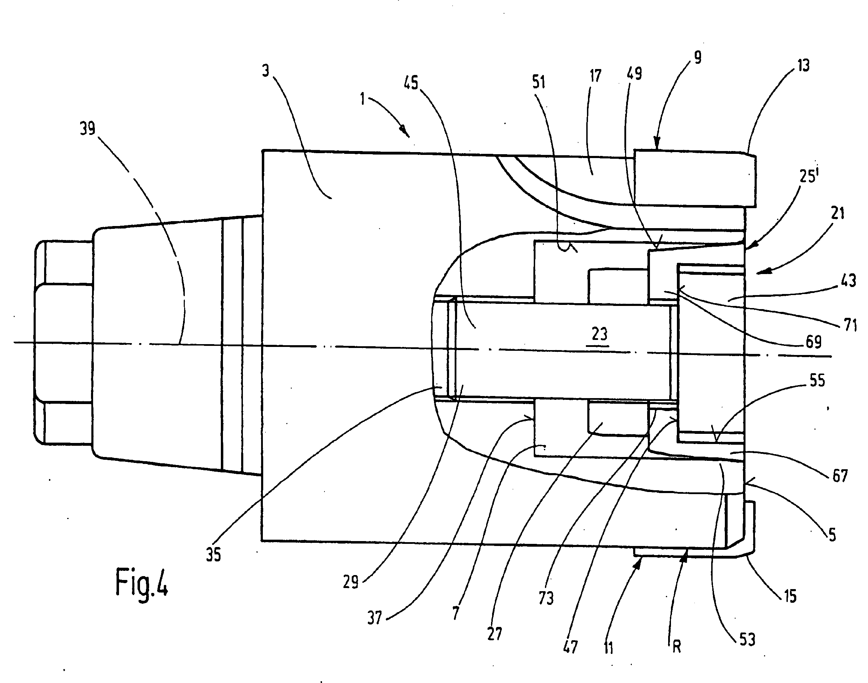

Ein nicht zur Erfindung gehörendes Ausführungsbeispiel einer Dehnreibahle ergibt sich aus Figur 4, welche die Dehnreibahle 1 in Seitenansicht wiedergibt, wobei die Seitenwand teilweise aufgeschnitten ist. Gleiche und funktionsgleiche Teile sind mit gleichen Bezugsziffern versehen, sodass in sofern auf die Beschreibung zu den vorangegangenen Figuren verwiesen wird.

Das aus Figur 4 ersichtliche Ausführungsbeispiel der Dehnreibahle 1 unterscheidet sich von dem in den vorangegangenen Figuren dargestellten dadurch, dass der Innendurchmesser des Hohlraums 7 so gewählt ist, dass er einen hier ebenfalls als Stellhülse 25' ausgebildeten Stellkörper aufnehmen kann. Die Stellhülse 25' ist hier so groß ausgelegt, dass ihre Innenfläche 55 die Außenfläche des Kopfes 43 der Stellschraube 23 nicht berührt. Die Stellhülse 25' nimmt hier also nicht nur den Schaft 45, sondern auch den Kopf 43 der Stellschraube 23 auf. Dabei weist die Stellhülse 25' eine Außenwand 67 auf, welche den Kopf 43 der Stellschraube 23 umgibt. Die Außenwand 67 geht in einen Boden 69 der Stellhülse 25' über, der eine Stützfläche 71 für die Auflagefläche 47 des Kopfes 43 der Stellschraube 23 bildet.

Der von der Außenwand 67 umschlossene Raum ist so groß, dass er den Kopf 43 der Stellschraube - vorzugsweise vollständig - aufnimmt; er ist also vorzugsweise in der Stellhülse 25' versenkt angeordnet.

Der Boden 69 ist mit einem Durchgangsloch 73 versehen, dessen Mittelachse mit der Mittelachse 39 der Dehnreibahle 1 zusammenfällt. Der Innendurchmesser des Durchgangsloch 73 ist so gewählt, dass der Boden 69 die Außenfläche des Schafts 45 nicht berührt und die Stellhülse 25', wie die Stellhülse 25 des in den Figuren 1 bis 3 dargestellten Ausführungsbeispiels der Dehnreibahle, schwimmend auf der Stellschraube 23 gelagert ist. Die Stellhülse 25' ist also auf dem Schaft 45 in axialer Richtung der Stellschraube, also in Richtung der Mittelachse 39, aber auch insbesondere in radialer Richtung zur Mittelachse 39 beweglich. Sollte also das Durchgangsloch 73 nicht exakt konzentrisch zur Mittelachse 39 verlaufen, kann sich die Stellhülse 25' unabhängig davon an der Innenfläche 51 des Hohlraums 7 ausrichten. Dadurch ist eine optimale Justierung der mindestens einen Schneidplatte der Dehnreibahle 1 auch hier gewährleistet.

Während also der Kopf 43 der Stellschraube 23 auf einer Ringfläche der Stellhülse 25 im Ausführungsbeispiel gemäß den Figuren 1 bis 3 aufliegt, greift die Stellschraube 23 so in das Innere der Stellhülse 25' ein, dass auch der Kopf 43 der Stellschraube 23 von der Stellhülse 25 aufgenommen wird und mit seiner Anlagefläche 47 im Inneren der Stellhülse 25' auf der Stützfläche 71 der Stellhülse 25' aufliegt. Die Anlagefläche 47 wirkt also mit einer im Inneren der Stellhülse 25' vorgesehenen Stützfläche 71 zusammen.

Damit kann die Stellschraube 23 ebenso wie die Stellhülse 25' versenkt in der Stirnseite 5 der Dehnreibahle 1 untergebracht werden, sodass diese auch zur Bearbeitung von Grundbohrungen beziehungsweise Sacklöchern eingesetzt werden kann, also von Bohrungen, die nicht als Durchgangsloch ausgebildet sind, sondern einen Boden aufweisen.

Die Außenfläche 49 der Stellhülse 25' ist, wie bei dem ersten Ausführungsbeispiel, konisch ausgebildet und wirkt mit der Innenfläche 51 des Hohlraums 7 zusammen, der, wie oben beschrieben, in einen Ringbereich 53 ballig ausgebildet sein kann.

Hier, wie bei dem ersten Ausführungsbeispiel, ist es auch möglich, die Außenfläche 49 der Stellhülse 25' ballig und die Innenfläche 51 des Hohlraums 7 konisch auszubilden. In beiden Fällen wird ein Keilgetriebe realisiert. Wird die Stellhülse 25' - in Figur 4 nach links - in den Hohlraum 7 hineinbewegt, so wird der Ringabschnitt R radial aufgeweitet. Dies führt zu einer radialen Einstellung der Schneiden der Dehnreibahle 1, von denen in Figur 4 die Schneiden 13 und 15 zu sehen sind.

Während bei dem Ausführungsbeispiel gemäß der Erfindung die Stellhülse 25 auf einer als Ringfläche ausgebildeten axialen Endfläche über die Anlagefläche 47 der Stellschraube 23 mit einer Kraft beaufschlagt wird, ist bei dem Ausführungsbeispiel gemäß Figur 4 vorgesehen, dass die Stellkräfte der Stellschraube 23 auf den Boden 69 der Stellhülse 25' wirken. Dazu liegt die Auflagefläche 47 des Kopfs 43 der Stellschraube 23 auf dem Boden 69, nämlich auf seiner Stützfläche 71, an. Wird die Stellschraube 23 in den Grundkörper 3 der Dehnreibahle 1 eingeschraubt, also in Figur 4 nach links bewegt, wird die Stellhülse 25' in das Innere des Hohlraums 7 hineingezogen und nicht, wie bei dem ersten Ausführungsbeispiel, hineingeschoben.

Aus Figur 4 wird deutlich, dass der Boden 69 der Stellhülse 25' vorzugsweise in einem größeren Abstand zur Stirnseite 5 der Dehnreibahle angeordnet ist, als der Ringbereich 53, auf den die Stellkräfte der Stellhülse 25' wirken. Damit liegt auch die Krafteinleitung der Stellschraube 23 in Figur 4 links von dem Ringbereich 53 des Ringabschnitts R.

Dies führt dazu, dass, wenn die Stellhülse 25' beim Justieren der Schneiden der Dehnreibahle 1 in den Hohlraum 7 hineingezogen wird, genauere Justierergebnisse realisiert werden können, als dies bei dem Ausführungsbeispiel gemäß den Figuren 1 bis 3 der Fall ist.

Wie aus Figur 4 ersichtlich ist, kann die Stelleinrichtung 21 auch hier eine Auszieheinrichtung 47 am Schaft 45 der Stellschraube 23 umfassen, mit deren Hilfe die Stellhülse 25' beim Lösen der Stellschraube 23 aus dem Hohlraum 7 der Dehnreibahle 1 herausgezogen werden kann. Es gilt hier das zur Auszieheinrichtung 47 des ersten Ausführungsbeispiels der Dehnreibahle 1 Gesagte entsprechend.

Auch hier kann die Stelleinrichtung 21 als vorgefertigte Montageeinheit realisiert sein, welche die Stellschraube 23, den als Stellhülse 25' ausgebildeten Stellkörper und die Auszieheinrichtung 27 umfasst. Es ergeben sich also die oben beschriebenen Vorteile, nämlich die Möglichkeit, verschiedene Stelleinrichtungen 21 mit unterschiedlichen Dehnreibahlen 1 zu kombinieren.

Besonders bevorzugt wird eine Dehnreibahle, die sich dadurch auszeichnet, dass der Ringabschnitt R Teil des Grundkörpers 3 der Dehnreibahle 1 ist.

Ebenfalls wird besonders eine Dehnreibahle bevorzugt, die sich dadurch auszeichnet, dass das Material zumindest der Außenfläche 49 des Stellkörpers 25 unabhängig wählbar ist von dem Material des Ringbereichs R und/oder der Stellschraube 25.

## Patentansprüche

1. Dehnreibahle mit
- einem Grundkörper (3),
- einem Ringabschnitt (R),
- mindestens einer auf der Außenfläche des Ringabschnitts (R) vorgesehenen geometrisch definierten Schneide (13,15, 13',15'),
- mit einer auf den Ringabschnitt (R) von Innen wirkenden, eine Stellschraube (23) umfassenden Stelleinrichtung (21) zur Einstellung der radialen Position der mindestens einen Schneide (13,15,13',15'), wobei
- die Stelleinrichtung (21) in einem in dem Grundkörper (3) der Dehnreibahle (1) vorgesehenen Hohlraum (7) angeordnet ist, und einen Stellkörper mit einer konischen oder balligen Außenfläche (49) aufweist, der in Richtung der Mittelachse (39) der Dehnreibahle (1) verlagerbar ist und der Aufweitung des Ringabschnitts (R) dient, wobei
- der Stellkörper als Stellhülse (25) ausgebildet ist, welche die Stellschraube (23) umgibt und auf dieser schwimmend gelagert ist, und wobei
- die Stellschraube (23) an ihrem ersten Ende (29) ein in den Grundkörper (3) der Dehnreibahle (1) eingreifendes Außengewinde (57), einen die Stellhülse (25) durchgreifenden, konzentrisch zur Mittelachse (39) der Dehnreibahle (1) angeordneten Schaft (45) und an ihrem dem ersten Ende (29) gegenüberliegenden zweiten Ende (41) einen Kopf (43) mit einer dem ersten Ende (29) zugewandten Anlagefläche (47), aufweist, an der die Stellhülse (25) anliegt,
**dadurch gekennzeichnet, dass**
- die Stellhülse (25) an ihrem der Anlagefläche (47) zugewandten Ende eine axiale Endfläche aufweist, an der die Anlagefläche (47) anliegt, sodass
- über die Anlagefläche (47) des Kopfes (43) der Stellschraube (23) in die axiale Endfläche der Stellhülse (25) Kräfte einleitbar sind.

2. Dehnreibahle nach Anspruch 1, **dadurch gekennzeichnet, dass** die Stelleinrichtung (21) eine Auszieheinrichtung (27) zur Mitnahme der Stellhülse (25) bei einer Auswärtsbewegung der Stellschraube (23) aus dem Hohlraum (7) aufweist, die von der Stellhülse (25) in dem im Grundkörper (3) der Dehnreibahle (1) vorgesehenen Hohlraum (7) eingeschlossen wird.

3. Dehnreibahle nach Anspruch 2, **dadurch gekennzeichnet, dass** die Auszieheinrichtung (27) als Gewindehülse, Querstift und/oder als auf dem Schaft der Stellschraube (23) vorgesehener Ringbund ausgebildet ist.

4. Dehnreibahle nach einem der vorhergehenden Ansprüche, **dadurch gekennzeichnet, dass** der Hohlraum (7) in der Dehnreibahle (1) einen Bereich mit einer konischen oder balligen Innenfläche (51) aufweist, die mit der Außenfläche (49) des Stellkörpers zusammenwirkt.

5. Dehnreibahle nach einem der vorhergehenden Ansprüche, **dadurch gekennzeichnet, dass** diese mindestens zwei, vorzugsweise drei, insbesondere vier oder sechs geometrisch definierte Schneiden (13,15,13',15') aufweist.

6. Dehnreibahle nach Anspruch 5, **dadurch gekennzeichnet, dass** die Schneiden (13,15,13',15') in etwa gleichem Umfangsabstand zueinander auf der Außenseite des Ringabschnitts (R) angeordnet sind.

## Claims

1. An expandable reamer having
- a base body (3),
- a ring section (R),
- at least one geometrically defined cutting edge (13, 15, 13', 15') provided on the outer surface of the ring section (R),
- having an adjustment device (21), acting upon the ring section (R) from inside and comprising an adjustment screw (23), for adjusting the radial position of the at least one cutting edge (13, 15, 13', 15'), wherein
- the adjustment device (21) is arranged in a cavity (7) provided in the base body (3) of the expandable reamer (1) and has an adjustment body comprising a conical or spherical outer surface (49), the adjustment body being displaceable in the direction of the central axis (39) of the expandable reamer (1) and serves to expand the ring section (R), wherein
- the adjustment body is configured as an adjustment sleeve (25), which surrounds the adjustment screw (23) and which is floatingly mounted thereon, and wherein
- the adjustment screw (23), at its first end (29), comprises an external thread (57) engaging with the base body (3) of the expandable reamer (1), a shaft (45) penetrating the adjustment sleeve (25) and being arranged concentrically to the central axis (39) of the expandable reamer (1), and, at its second end (41), which is located opposite the first end (29), comprises a head (43) having a contact surface (47) facing the first end (29), against which the adjustment sleeve (25) rests,
**characterized in that**
- the adjustment sleeve (25), at its end facing the contact surface (47), comprises an axial end face, against which the contact surface (47) rests, so that
- forces can be introduced into the axial end face of the adjustment sleeve (25) via the contact surface (47) of the head (43).

2. The expandable reamer according to claim 1, **characterized in that** the adjustment device (21) encompasses an extension device (27), which is enclosed by the adjustment sleeve (25) in the cavity (7) provided in the base body (3) of the expandable reamer (1), for carrying the adjustment sleeve (25) in response to an outward movement of the adjustment screw (23) out of the cavity (7).

3. The expandable reamer according to claim 2, **characterized in that** the extension device (27) is embodied as a threaded sleeve, cross pin and/or as a ring collar, which is provided on the shaft of the adjustment screw (23).

4. The expandable reamer according to any one of the preceding claims, **characterized in that** the cavity (7) provided in the expandable reamer (1) comprises a region having a conical or spherical inner surface (51), co-acting with the outer surface (49) of the adjustment body.

5. The expandable reamer according to any one of the preceding claims, **characterized in that** it encompasses at least two, preferably three, in particular four or six geometrically defined cutting edges (13, 15, 13', 15').

6. The expandable reamer according to claim 5, **characterized in that** the cutting edges (13, 15, 13', 15') are arranged on the outer side of the ring section (R), approximately at the same peripheral distance to one another.

## Revendications

1. Alésoir extensible comprenant
- un corps de base (3),
- une section annulaire (R),
- au moins une lame (13, 15, 13', 15') définie géométriquement, prévue sur la surface externe de la section annulaire (R),
- avec un dispositif de réglage (21) comprenant une vis de réglage (23), agissant de l'intérieur sur la section annulaire (R), pour le réglage de la position radiale de l'au moins une lame (13, 15, 13', 15'), dans lequel
- le dispositif de réglage (21) est disposé dans un espace creux (7) prévu dans le corps de base (3) de l'alésoir extensible (1) et présente un corps de réglage avec une surface externe conique ou bombée (49) qui peut être déplacé en direction de l'axe médian (39) de l'alésoir extensible (1) et sert à l'élargissement de la section annulaire (R), dans lequel
- le corps de réglage est réalisé en tant que manchon de réglage (25) qui entoure la vis de réglage (23) et est logé de manière flottante sur celle-ci, et dans lequel
- la vis de réglage (23) présente à sa première extrémité (29) un filetage externe (57) s'engrenant dans le corps de base (3) de l'alésoir extensible (1), une tige (45) traversant le manchon de réglage (25), disposé de manière concentrique à l'axe médian (39) de l'alésoir extensible (1) et à sa seconde extrémité (41) opposée à la première extrémité (29) une tête (43) avec une surface d'appui (47) tournée vers la première extrémité (29) sur laquelle le manchon de réglage (25) repose,
**caractérisé en ce que**
- le manchon de réglage (25) présente à son extrémité tournée vers la surface d'appui (47) une surface d'extrémité axiale sur laquelle la surface d'appui (47) repose de sorte que
- des forces peuvent être introduites par le biais de la surface d'appui (47) de la tête (43) de la vis de réglage (23) dans la surface d'extrémité axiale du manchon de réglage (25).

2. Alésoir extensible selon la revendication 1, **caractérisé en ce que** le dispositif de réglage (21) présente un dispositif d'extraction (27) pour l'entraînement du manchon de réglage (25) lors d'un mouvement vers l'extérieur de la vis de réglage (23) en dehors de l'espace creux (7), lequel dispositif d'extraction est inclus par le manchon de réglage (25) dans l'espace creux (7) prévu dans le corps de base (3) de l'alésoir extensible (1).

3. Alésoir extensible selon la revendication 2, **caractérisé en ce que** le dispositif d'extraction (27) est réalisé en tant que manchon fileté, tige transversale et/ou en tant que collet annulaire prévu sur la tige de la vis de réglage (23).

4. Alésoir extensible selon l'une quelconque des revendications précédentes, **caractérisé en ce que** l'espace creux (7) dans l'alésoir extensible (1) présente une région avec une surface interne conique ou bombée (51) qui coopère avec la surface externe (49) du corps de réglage.

5. Alésoir extensible selon l'une quelconque des revendications précédentes, **caractérisé en ce que** celui-ci présente au moins deux, de préférence trois, notamment quatre ou six lames définies géométriquement (13, 15, 13', 15').

6. Alésoir extensible selon la revendication 5, **caractérisé en ce que** les lames (13, 15, 13', 15') sont disposées sur le côté externe de la section annulaire (R) à un écart périphérique approximativement égal les unes des autres.
